**Europäisches Patentamt**

**(19) European Patent Office**

**Office européen des brevets**

(11) Publication number : **0 366 803 B1**

(12) **EUROPEAN PATENT SPECIFICATION**

(45) Date of publication of patent specification :
15.02.95 Bulletin 95/07

(51) Int. Cl.⁶ : **G02B 5/30, G02B 1/08**

(21) Application number : **89903267.6**

(22) Date of filing : **06.03.89**

(86) International application number :
**PCT/JP89/00237**

(87) International publication number :
**WO 89/08857 21.09.89 Gazette 89/23**

(54) **POLARIZING FILM.**

(30) Priority : **08.03.88 JP 54657/88**
**08.03.88 JP 54658/88**

(43) Date of publication of application :
**09.05.90 Bulletin 90/19**

(45) Publication of the grant of the patent :
**15.02.95 Bulletin 95/07**

(84) Designated Contracting States :
**AT BE CH DE FR GB IT LI LU NL SE**

(56) References cited :
**DE-A- 1 569 165**
**FR-A- 2 616 360**
**JP-A- 5 648 601**
**JP-A- 6 143 703**
**JP-A-62 240 905**
**US-A- 4 133 775**

(73) Proprietor : **TORAY INDUSTRIES, INC.**
**2-1, Nihonbashi Muromachi 2-chome**
**Chuo-ku**
**Tokyo 103 (JP)**

(72) Inventor : **AMANO, Jiro 10-10-711, Kosobe-cho**
**2-chome**
**Takatsuki-shi**
**Osaka 569 (JP)**
Inventor : **TOHYAMA, Syunroku 1173-36,**
**Tobakou Yasu-cho**
**Yasu-gun**
**Shiga 520-23 (JP)**

(74) Representative : **Kador & Partner**
**Corneliusstrasse 15**
**D-80469 München (DE)**

EP 0 366 803 B1

## Description

Technical Field

The present invention relates to a polarization film of polyvinyl-alcohol type which is superior both in the light polarization performance and resistance to moisture and heat and which contains iodine adsorbed and oriented A polarization film according to Claim 1, wherein said zirconium compound is at least one selected from a group consisting of a zirconium halide , oxizirconium halide, inorganic zirconium salt and their hydrolyzates.

Background Art

In recent years, there is an increasing demand for polarization films partly because of spreading use of liquid crystal display devices on various apparatus such as word processors, personal computers and liquid crystal televisions and partly because of a trend for greater display area of liquid crystal display devices. Hitherto, polyvinyl-alcohol-type polarization films (abbreviated as PVA hereinafter) have been used in liquid crystal display devices, and improvements are required to attain higher polarization performance and durability. Polarization films of PVA type are generally sorted into the following types: namely, (1) an iodine-type film in which iodine is adsorbed and oriented on a film material, (2) a dye-type film in which a dichroic dye is adsorbed and oriented on a film material, and (3) a polyene type film obtained by partly dehydrating a film material.

Among these polarization films, the iodine-type film is used most broadly because it is superior in the polarization performance as compared with other types of polarization film. Unfortunately, however, the iodine-type polarization film is not resistant to moisture and heat.

In order to overcome this problem, Japanese Patent Unexamined Publication No. 56-48601 proposes a method in which the film having iodine adsorbed and oriented thereon is impregnated with cobalt ions, and Japanese Patent Unexamined Publication No. 62-18030 proposes a method in which the film having iodine adsorbed and oriented thereon is impregnated with nickel ions. These proposals, however, failed to improve resistance to moisture and heat to appreciable level, so that the iodine-type film could have only limited use due to inferior humidity and heat resistance despite its superior polarization performance.

Accordingly, an object of the present invention is to provide a polarization film which simultaneously satisfies both the demands for superior polarization performance and high resistance to moisture and heat.

Disclosure of the Invention

The invention provides a polarization film of polyvinyl-alcohol-type having iodine adsorbed and oriented thereon, characterized in that the film contains a zirconium salt or its hydrolyzate or a manganese salt.

The Best Mode for Carrying Out the Invention

The present invention will be described in detail hereinafter.

Examples of the PVA-type films used in the present invention are a PVA film, a polyvinyl formal film, polyvinyl acetal film, poly(ethylene-vinyl acetate)copolymer saponification film, and a PVA derivative film such as a partially polyenated PVA film.

Known processes can be used for allowing iodine to be adsorbed and oriented on a PVA-type film, such as a method in which a non-drawn PVA-type film is immersed in an aqueous solution of iodine and potassium iodide followed by uni-axial drawing, or a method in which uniaxially-drawn PVA-type film is immersed in an aqueous solution of iodine and potassium iodide.

Impregnation of such a PVA-type film with a zirconium compound or a manganese compound can be effected by any of ordinary processes. For instance, processes are usable such as a process in which the zirconium compound or the manganese compound is added to the aqueous solution of PVA-type film cast-forming resin, a process in which the zirconium compound or the manganese compound is added to an aqueous solution of iodine and potassium iodide so as to enable the film to contain the zirconium compound or the manganese compound simultaneously with the adsorption of iodine, a process in which undrawn film with iodine adsorbed thereon is drawn in an aqueous solution containing boric acid, potassium iodide, and the zirconium compound or the manganese compound, and a process in which a drawn film on which iodine has been adsorbed and oriented is immersed in an aqueous solution containing boric acid, potassium iodide, and the zirconium compound or the manganese compound. Thus, adsorption, orientation and fixing (cross-linking of PVA and other component) are conducted in most cases in aqueous solutions. It will readily be understood that the last two processes in which the zirconium compound or the manganese compound is added in the final step are used preferably.

The zirconium compound used in the present invention is preferably a zirconium salt or a hydrolyzate thereof. For instance, a halide of zirconium such as zirconium chloride, zirconium bromide or zirconium iodide, oxi-halide of zirconium, zirconium sulfate, zirconium nitrate and a hydrolyzate of one of such substances can be used suitably as the zirconium compound. Thus, the zirconium compound contained in the PVA-type film exists in the form of zirconium ions or oxi-zirconium ions.

The zirconium content in the polarization film preferably ranges between 0.1 and 50 mg, more preferably between 0.5 and 20 mg, per one gram of the PVA-type film.

The manganese compound used in the present invention is preferably a manganese salt. Examples of such a manganese salt are a halide of manganese such as manganese chloride, manganese bromide and manganese iodide, manganese acetate, manganese sulfate, manganese nitrate, and so forth.

The manganese content in the polarization film preferably ranges 0.05 and 50 mg, more preferably between 0.5 and 20 mg, per one gram of the PVA-type film.

The mechanism of the effect produced by a zirconium compound or a manganese compound in the present invention has not been clarified. However, as a result of an intense study of the iodine-type PVA film which is inferior in moisture and heat resistance, the inventors have found that polyiodine ions $I_3^-$ and $I_5^-$ which exhibit absorption in visible light region to develop the polarization performance are dissociated into transparent $I^-$ which have no absorption in the visible light region, when the iodine-type PVA film is treated at high moisture and temperature. Thus, the inventors have found that the iodine density in the film is never reduced even after the film has been made transparent to lose the polarization performance as a result of a treatment at high humidity and temperature. It is considerable that the zirconium compound or the manganese compound can form chelate with PVA and polyiodine ions through many coordinate bondings. It is also conceivable that the zirconium compound or the manganese compound inhibits the dissociation equilibrium of the polyiodine ions. Anyway, what is to be noted is the fact that the resistance to moisture and heat is improved by a zirconium compound or a manganese compound, rather than the mechanism of such an effect.

The polarization film of the present invention is superior in optical characteristics ( transmittance and polarization efficiency), as well as in resistance to moisture and heat and, therefore, can have a wide use including application to devices which are used under severe conditions and application to ordinary household devices such as word processors, e.g., various optical instruments and devices, sunglasses, front window glasses of automobiles, windows of buildings, and so forth. Furthermore, the polarization film of the present invention is expected to find further spreading use such as liquid crystal display devices on instrument panels of automobiles.

[Examples]

Examples of the polarization film of the invention are shown below together with comparison examples.

Measurement of transmittance of the following Examples and Comparison Examples was conducted with a spectrophotometer (U-3400 manufactured by Hitachi, Ltd.). Transmittance Y of a single film, parallel transmittance $Y_1$ presented by two layers of the films superposed with their molecular orientation directions put parallel to each other, and orthogonal transmittance $Y_2$ presented by two layers of the films superposed with their molecular orientation directions set orthogonal to each other were measured and mean values of the respective transmittance over the visible light region of 400 to 700 nm were obtained.

The pularization efficiency was determined in accordance with the following formula:

$$\text{polarization efficiency } V \ (\%) \ = \ \sqrt{\frac{Y_1 - Y_2}{Y_1 + Y_2}} \ \text{x} \ 100$$

Example 1

A PVA film was uniaxially drawn at a ratio of 4.5 at 130°C and was laminated with a cellulose triacetate (abbreviated as CTA hereinafter) film so that single-side laminated PVA film (referred to as semi-laminated film) was obtained.

The semi-laminated film was immersed for 15 seconds in an aqueous solution of 35°C containing 0.3 wt% of iodine and 5 wt% potassium iodide (iodine adsorption bath). After a subsequent rinsing, the semi-laminated film was immersed for 30 seconds in an aqueous solution of 75°C containing 4 wt% of boric acid, 10 wt% of potassium iodide and 8 wt% of zirconium chloride, followed by rinsing and drying.

Then, 1-minute heat treatment was effected at 150°C on the semi-laminated film in a tensed state, whereby a polarization film in which the PVA side is laminated with CTA film was obtained (zirconium content approximately 13 mg per one gram of PVA film).

The initial performance of this film, as well as performance after a moisture and heat treatment (75°C, 90% RH, 8 hours), is shown in Table 1.

## Example 2

A polarization film (zirconium content approximately 15 mg per one gram of PVA film) was obtained through the same process as Example 1 except that zirconium chloride of the fixing bath was replaced with 5 wt% of oxi-zirconium chloride and that the temperature of the fixing bath was changed to 70°C.

The initial performance of this film, as well as performance after a moisture and heat treatment (75°C, 90% RH, 8 hours), is shown in Table 1.

## Example 3

A polarization film (manganese content approximately 15 mg per one gram of PVA film) was obtained through the same process as Example 2 except that oxi-zirconium chloride was replaced with 5 wt% of manganese chloride.

The initial performance of this film, as well as performance after a moisture and heat treatment (75°C, 90% RH, 8 hours), is shown in Table 1.

## Example 4

A polarization film (manganese content approximately 12 mg per one gram of PVA film) was obtained through the same process as Example 3 except that the content of the potassium iodide was changed to 10 wt% in each of the iodide adsorption bath and the fixing bath.

The initial performance of this film, as well as performance after a moisture and heat treatment (75°C, 90% RH, 8 hours), is shown in Table 1.

## Comparison Example 1

A polarization film was prepared by the same process as Example 1 except that the fixing bath did not contain zirconium chloride.

## Comparison Example 2

A polarization film was prepared by the same process as Example 2 except that the oxi-zirconium chloride of the fixing bath was replaced with 5 wt% of cobalt chloride.

## Comparison Example 3

A polarization film was prepared by the same process as Example 2 except that the oxi-zirconium chloride of the fixing bath was replaced with 5 wt% of nickel chloride.

Table 1

| Tested polarization films | Initial Performance | | Performance after treatment (8 hours at 75ºC and 90%RH) | |
|---|---|---|---|---|
| | Trans-mittance Y(%) | Polari-zation efficiency V(%) | $\triangle Y(\%)$ | $\triangle V(\%)$ |
| Example 1 | 40.6 | 99.3 | 1.3 | 1,9 |
| Example 2 | 41.3 | 98.9 | 2.5 | 1.0 |
| Example 3 | 39.6 | 99.1 | 1.6 | 2.9 |
| Example 4 | 41.2 | 98.3 | 0.5 | 1.1 |
| Comparison Example 1 | 32.7 | 96.3 | 11.0 | 6.2 |
| Comparison Example 2 | 41.0 | 99.2 | 4.1 | 13.7 |
| Comparison Example 3 | 39.4 | 98.9 | 9.3 | 19.0 |

$\triangle Y$: Change in Transmittance by moisture and heat treatment (8 hours at 75ºC and 90%RH)

$\triangle V$: Change in Polarization efficiency by moisture and heat treatment (8 hours at 75ºC and 90%RH)

## Claims

1. A polarization film comprising a polyvinyl-alcohol-type film having iodine adsorbed and oriented thereon, characterized in that said film contains a zirconium salt or its hydrolyzate or a manganese salt.

2. A polarization film according to claim 1, wherein the zirconium content is 0.1 to 50 mg per one gram of said polyvinyl-alcohol-type film.

3. A polarization film according to claim 1, wherein the manganese content is 0.05 to 50 mg per one gram of said polyvinyl-alcohol-type film.

**Patentansprüche**

1. Polarisationsfolie, die eine Folie vom Polyvinylalkohol-Typ umfaßt, auf der Jod adsorbiert und orientiert ist, dadurch gekennzeichnet, daß diese Folie ein Zirconiumsalz oder dessen Hydrolysat oder ein Mangansalz enthält.

2. Polarisationsfolie nach Anspruch 1, wobei der Zirconiumgehalt 0,1 bis 50 mg pro 1 g der Folie vom Polyvinylalkohol-Typ beträgt.

3. Polarisationsfolie nach Anspruch 1, wobei der Mangangehalt 0,05 bis 50 mg pro 1 g der Folie vom Polyvinylalkohol-Typ beträgt.


**Revendications**

1. Film de polarisation comprenant un film du type alcool polyvinylique ayant de l'iode adsorbé et orienté sur celui-ci, caractérisé en ce que ledit film contient un sel de zirconium ou son hydrolysat ou un sel de manganèse.

2. Film de polarisation selon la revendication 1, dans lequel la teneur en zirconium est de 0,1 à 50 mg par un gramme dudit film du type alcool polyvinylique.

3. Film de polarisation selon la revendication 1, dans lequel la teneur en manganèse est de 0,05 à 50 mg par un gramme dudit film du type alcool polyvinylique.